# EUROPEAN PATENT SPECIFICATION

(11) **EP 1 864 403 B1**
(45) Date of publication and mention of the grant of the patent: **11.07.2012**
(21) Application number: 06726409.3
(22) Date of filing: 17.03.2006
(51) Int. Cl.: H04B 7/08, H04W 52/08, H04W 52/22, H04B 1/707

(54) **BASE TRANSCEIVE AND METHOD FOR SELECTING A RECEPTION MODE**
BASISSENDER/-EMPFÄNGER UND VERFAHREN ZUR AUSWAHL EINES EMPFANGSMODUS
EMETTEUR-RECEPTEUR DE BASE ET PROCEDE DE SELECTION D'UN MODE DE RECEPTION

(30) Priority: 18.03.2005 GB 0505637
(43) Date of publication of application: 12.12.2007
(73) Proprietor: FRANCE TELECOM, 75015 Paris (FR)
(72) Inventor: STIDWELL, Alan, George., Cardinham,Bodmin, Cornwall PL30 4EG (GB); IBIDUN, Kunle, Bristol BS3 4LS (GB); REYNOLDS, Paul, Easton,Wells B45 1AT (GB); BAILEY, Richard, James., Bristol BS36 1QF (GB); STANBRIDGE, Iain, David, Bath BA1 6AX (GB)
(74) Representative: Thiel, Frédéric
(86) International application number: PCT/GB2006/000959
(87) International publication number: WO 2006/097742

(56) References cited:
- EP-A- 1 139 580
- WO-A-01/05088
- WO-A-02/078205
- YOSHIO KARASAWA: "Software Antenna with Algorithm Diversity" PROCEEDINGS OF THE XXVIITH URSI GENERAL ASSEMBLY, [Online] 17 August 2002 (2002-08-17), XP002383527 Maastricht Retrieved from the Internet: URL:http://www.ursi.org/Proceedings/ProcGA 02/papers/p0483.pdf> [retrieved on 2006-05-31]

## Description

### Field of the Invention

The present invention relates to base transceiver stations for mobile radio networks which are operable in response to power control commands received from mobile user equipment to adjust a power with which data bearing radio signals are transmitted to the mobile user equipment from the base transceiver stations.

### Background of the Invention

Mobile radio communications networks provide a mobile communications facility to mobile user equipment, by communicating radio signals in accordance with a radio access interface. The radio access interface is provided by base transceiver stations of the mobile radio network, which include radio transceiver equipment for transmitting and receiving data bearing radio signals with corresponding transceiver equipment in the mobile user equipment. The data may be transmitted in accordance with a radio access interface standard. For example the Global System for Mobiles (GSM) operates in accordance with a Time Division Multiple Access (TDMA) system which allows an available radio frequency band to be divided into time slots for communicating data in the form of bursts of narrow-band radio signals. In a contrast the Universal Mobile Telecommunications System (UMTS) provides a radio access interface between base transceiver stations (referred to as Node Bs) and user equipment by communicating spread spectrum radio signals over a wide band-width. For this example, the mobile user equipment are able to communicate data contemporaneously by using different spreading codes.

In a cellular mobile system, mobile user equipment may experience a variety of different conditions for communicating radio signals. This may depend on the type of radio access interface. For example, multi-path propagation may occur which can cause inter-symbol interference in the received radio signals. In another example, a co-channel interferer may disrupt the reception of a wanted-radio signals.

There are various techniques, which can be employed to improve the likelihood of correctly receiving data from radio signals. One technique is to use an array of antennae, each antenna being arranged to receive a different version of the radio signal. Using various techniques, the versions of the radio signal can be combined to either reinforce a wanted radio signal or suppress a co-channel interferer. In an article entitled "Software Antenna with Algorithm Diversity" by Yoshio Karasawa et at published in IEIC Trans. Communications in June 2000, an antenna system is disclosed which is provided with a receiver processor. The antenna system and the receiver processor can provide a plurality of reception modes, one of the reception modes being selected in dependence upon a currently experienced reception condition determined, amongst other things by the reception environment. Using information on both space and time domains, a reception technique is selected, which is optimum for the type of reception conditions. For example, for a multi-path environment without a delay spread and no interferers, maximum ratio combining is selected, whereas for a strong co-channel interferer with delay spread, a minimum mean square error algorithm is used in combination with adaptive antenna reception, to cancel the co-channel interference.

Although it is known to provide a receiver having a plurality of different reception modes using different reception techniques, such receivers must also assess the current reception condition experienced by the mobile user equipment, in order to select the most appropriate reception mode.

Document WO 01/05088 discloses a base transceiver station for mobile radio network operable in response to power control commands received from a mobile user equipment to adjust a power with which a data bearing radio signal is transmitted to the mobile user equipment from the base transceiver station.

### Summary of Invention

According to the present invention there is provided a base transceiver station according to claim 1.

The present invention provides an arrangement in which a base transceiver station can generate an estimate of a current reception condition produced by an environment with which a mobile user equipment is currently receiving a radio signal from the base transceiver station. As such, the base transceiver station can determine which reception technique would be most appropriate for optimising currently experienced communication conditions. The base transceiver station estimates a current reception condition using power control commands which are provided by the mobile user equipment, in accordance with an existing radio access interface, which may be in accordance with standard such as GSM or UMTS.

According to some embodiments the command generation processor is operable to identify the plurality of reception modes which are available to the mobile user equipment, and to compare the frequency domain representation of the current reception condition with predetermined references. The predetermined references may provide a reference frequency domain representation, which is appropriate for each of the plurality of reception modes. Consequent upon the comparison of the frequency domain representation of the current reception condition with the predetermined references, the command generation processor is operable to generate the receiver mode command for selecting one of the plurality of reception modes in correspondence with the predetermined reference which most closely matches the frequency domain representation of the current reception condition.

In one example the mobile user equipment can switch between a reception mode in which the receiver uses an equaliser to reduce inter-symbol interference in the received down-link radio signal and a rake receiver mode in which the receiver uses a rake receiver to detect the down-link radio signal.

The term base transceiver station is used herein to refer to a base station which forms part of a mobile radio network. The base station is that part which communications radio signals in accordance with a radio access interface provided by the mobile network for communicating data with the mobile user equipment within a radio coverage area provided by the base transceiver station. According to the Global System for Mobiles (GSM) the base transceiver station is referred to by the term base station, whereas in GPRS/UMTS the term Node B is used. It will therefore be appreciated that the term base transceiver station includes the terms Node B and base station as examples and other functional elements which perform corresponding functions within mobile radio networks.

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 schematically illustrates a mobile radio network according to the UMTS standard;
Figure 2 schematically illustrates parts of the mobile radio network shown in Figure 1 in which mobile user equipment are receiving radio signals from base transceiver stations (Node B);
Figure 3 schematically illustrates a mobile user equipment and a base transceiver station communicating radio signals;
Figure 4 is a schematic block diagram of a base transceiver station (Node B) according to the present technique;
Figure 5 is a schematic block diagram illustrating a mobile user equipment which is arranged to select one of a plurality of reception modes in accordance with a receiving mode command received from the base transceiver station shown in Figure 4;
Figure 6a is a schematic block diagram of a receiver which includes two antennae operable to perform a diversity combiner and Figure 6b is a schematic block diagram of a receiver which includes two antennae operable to perform an adaptive combining reception mode; and
Figure 7 is a flow diagram summarising the operation of a base transceiver station in accordance with an example of the present technique.

### Description of Example Embodiments

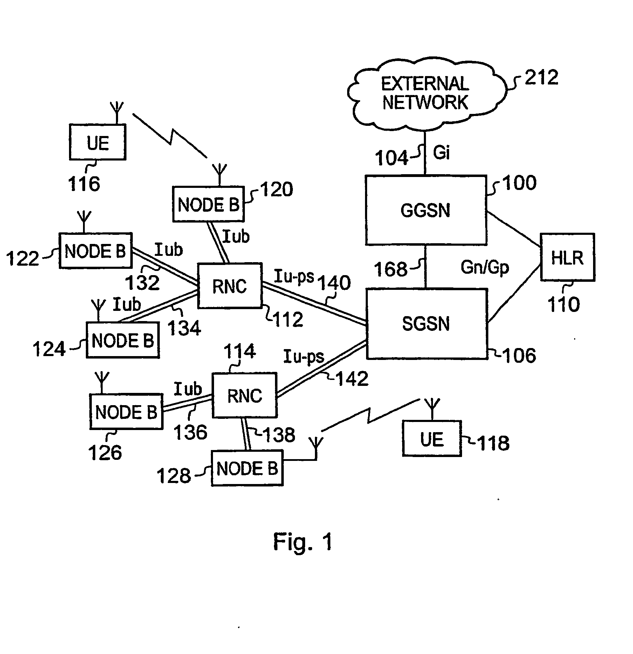

An example mobile radio network is provided in Figure 1. The mobile radio network shown in Figure 1 is explained in more detail in Annex 1. To assist in understanding and explaining the present technique, a brief description will be provided here. The mobile radio network presented in Figure 1 illustrates an arrangement which conforms to the GPRS/UMTS standard and provides a mobile radio network for communicating data via a radio access interface in accordance with the Universal Terrestrial Radio Access Network (UTRAN). The mobile radio network includes a Gateway Support Node (GGSN) which provides an interface between an external network 212 and the mobile radio network for communicating data to and from the external network for mobile user equipment which are attached to the GPRS/UMTS network. The mobile radio network shown in Figure 1 includes a plurality of base transceiver stations which are referred to in the UMTS standard as Node Bs. The Node Bs 120, 122, 124, 126, 128 are connected by Radio Network Controllers (RNC) which are then connected to an Serving GPRS Support Nodes (SGSN) 106 which is connected to the GGSN 100. As shown in Figure 1, mobile user equipment 116, 118 communicate radio signals in accordance with the UTRAN standard within a radio coverage area provided by the Node Bs.

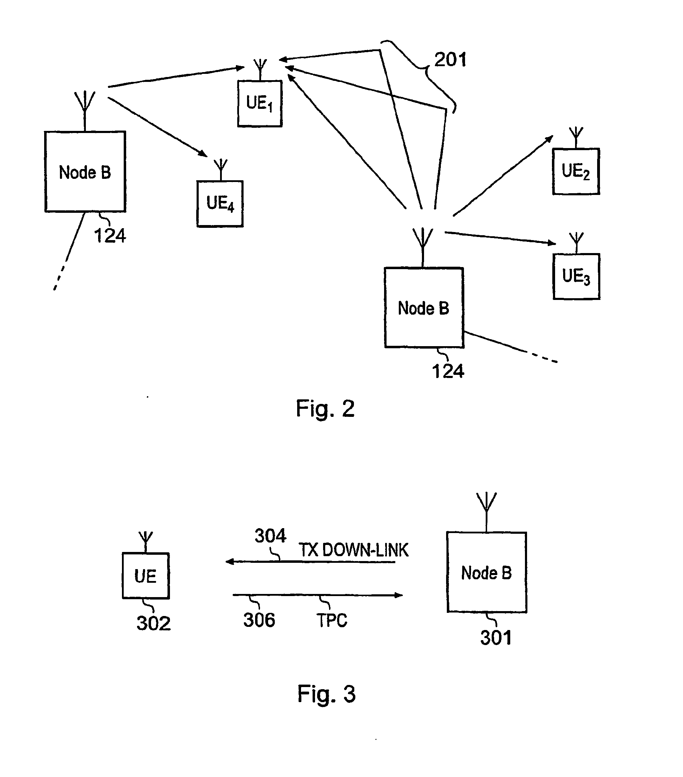

Figure 2 provides a simplified representation of the mobile radio network shown in Figure 1. In Figure 2 two Node B's 122, 124 are shown to be communicating radio signals with mobile user equipment UE1, UE2, UE3, UE4 via the radio access interface of the mobile radio network. To illustrate the present techniques the simplified representation of the radio access interface shown in Figure 2 concerns communication on the down-link, that is from the Node B to the mobile user equipment (UE1, UE2, UE3, UE4).

As shown in Figure 2 the mobile user equipment UE1 receives radio signals transmitted by the Node B 122 via several paths, which are represented in Figure 2 by arrow-headed lines 201. As is known to those acquainted with radio communications, a signal may be received via more than one path, depending upon the carrier frequency of the radio signals. For systems like GSM inter-signal interference can occur if the difference in time between receipt of the same symbol via different paths is greater than the symbol period. Figure 2 therefore illustrates an example situation in which one of the mobile user equipment UE1 receives a wanted radio signal from the Node B 122 to which it is currently affiliated in the presence of multi-path propagation.

As shown in Figure 2 other mobile user equipment UE2, UE3 also receive signals from the Node B 122 whereas the mobile user equipment UE4 receives radio signals from a second of the two Node B's 124. As a result of the proximity of UE4 to UE1, the mobile user equipment UE1 receives a wanted radio signal from the first Node B 122, but experiences co-channel interference as a result of the radio signals transmitted by the second Node 124 intended for the other mobile user equipment UE4. The second Node B 124 is actually communicating with the other mobile user equipment UE4. However this communication disturbs the reception of the wanted radio signals from the first Node B 122 at the first mobile user equipment UE1, because the radio signal transmitted to the other mobile user equipment UE4 is on the same frequency channel. Therefore, because of the proximity of this other user mobile equipment UE4 to the first user equipment UElco-channel interference is produced. For this example, co-channel interference is caused because the utilises a Wideband-CDMA (W-CDMA) radio access interface in accordance with the UMTS Terrestrial Radio Access Network (UTRAN). Accordingly, the first and the second Node Bs 122, 124 are transmitting on the same frequency.

As will be explained shortly, various reception and antenna diversity techniques are available which can be used to mitigate a currently experienced radio reception condition to the effect of optimising a likelihood of correctly detecting data conveyed by the radio signals. The present technique provides a facility for estimating the currently experienced radio reception condition, to allow an optimum reception mode using a technique to be determined for the currently experienced communication conditions and to communicate this optimum reception mode to the mobile user equipment. For example, in the presence of multi-path interference the mobile user equipment UE1 may be directed to use a Rake receiver in order to combine the energy from each of the paths via which the radio signal is received. Alternatively, or in addition in order to cancel the presence of co-channel interference the mobile user equipment UE1 may use an adaptive antenna array to steer a null towards the co-channel interferer thus reducing the effect of the co-channel interferer and increasing the effect of the wanted radio signal. Examples of the present technique will now be explained.

Figure 3 provides a schematic illustration of a process in which the mobile user equipment is arranged to adjust the power with which a Node B (base transceiver station) transmits radio signals to the mobile user equipment (down-link) in accordance with a strength with which the radio signals are received from the Node B at the mobile user equipment Thus as illustrated in Figure 3 the Node B 301 transmits an information bearing radio signal on the down-link to the mobile user equipment 302 as represented by an upper arrow 304. The mobile user equipment 302 which operates in accordance with a CDMA standard such as that specified for UTRAN uses both an open loop power control and a closed loop power control in order to request that the Node B either increase the power of the transmitted signal 304 or reduce the power of the transmitted signal 304. Thus the mobile user equipment 302 uses a radio receiver which continuously measures a radio signal strength of the signal 304 received from Node B to estimate the strength loss between the Node B and the mobile user equipment. For the example of the UTRAN standard, the up-link and the down-link are arranged on different frequency bands. As such, the radio frequency conditions will be different because the frequency bands for the up-link and down-link are separated by much greater than a frequency coherence bandwidth of the radio channel. Accordingly, the up-link and the down-link signals will fade differently. Furthermore the open loop power adjustment may not adequately cope with the fast fading conditions of the radio channel. Therefore as is conventional with CDMA radio communication systems, the closed loop power control mechanism is used to allow the Node B to perform fine adjustments of the transmitted down-link power. To this end, the mobile user equipment 302 determines the currently received signal strength and communicates an up or down power control command in a sub-channel to the Node B 301. For the example of W-CDMA, the power control bit is sent in every time slot, for example every 66 microseconds whereas in CDMA 2000 the power control bit is sent every 1.2 milliseconds. These power control commands are used to control the down-link power in one dB steps for each user of a dedicated down-link channel. As a result the closed loop adjustment range relative to the open loop power control is between +/- 20 dB's for WCDMA and +/-24 dB's for CDMA 2000. Thus, as shown in Figure 3 the power control sub channel transmits Transmission Power Control (TPC) commands to the Node B as illustrated by a lower arrow 306. As will be explained shortly, in accordance with the present technique the TPC commands are used to estimate the currently experienced radio reception environment by the mobile user equipment in accordance with the present technique.

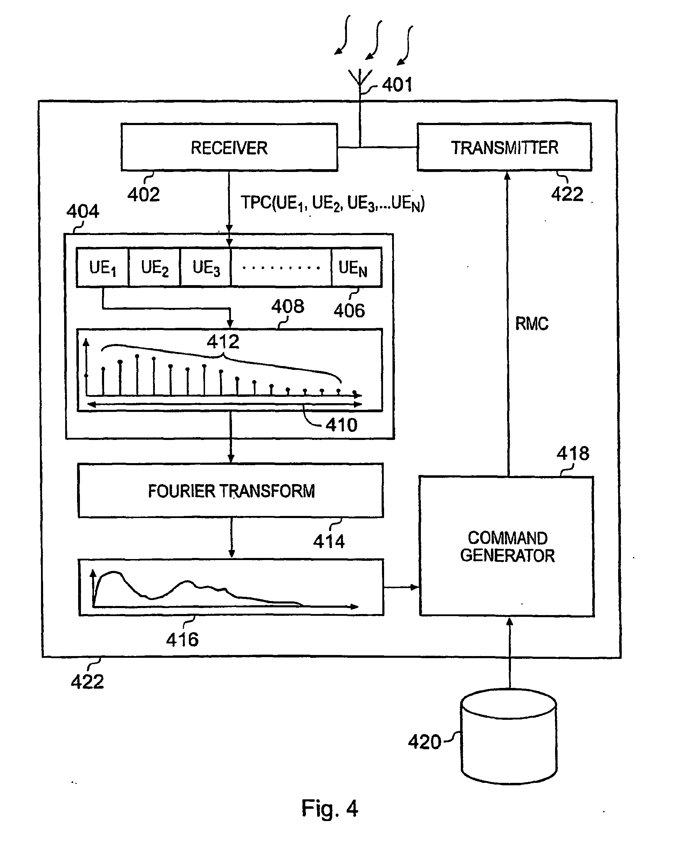

Figure 4 provides an example of a Node B which is used to determine a current radio reception condition experienced by each of the mobile user equipment UE1, UE2, UE3 which are currently affiliated with that Node B 122. As shown in Figure 4, the Node B 122 receives up-link radio signals transmitted from the mobile user equipment at an antenna 401. As will be appreciated the antenna 401 could comprise an array of antennae thereby providing the facility for diversity reception which, as explained shortly, can be used to improve a likelihood of correctly detecting data transmitted by the radio signals. The radio signals detected by the antenna 401 are sent to a receiver processor 402, which operates to detect and recover data from the radio signals in accordance with a conventional operation. The receiver processor 402 will operate independence upon the type of modulation and the type of radio access technique, which is employed for the radio access interface. So for example for WCDMA, the receiver processor 402 may use one of more Rake receivers.

As well as recovering data transmitted on the up-link from the mobile user equipment to the Node B, the receiver processor 402 recovers the power control commands TPC for each of the mobile user equipment UE1, UE2, UE3 which are affiliated with that Node B 124. As shown in Figure 4 the TPC commands from each of the mobile user equipment affiliated with the Node B 124 are fed to an analyser 404. As shown in Figure 4 the analyser is arranged to separate the TPC commands form each of the mobile user equipment UE1, UE2, UE3, ......, UEN, and to store each of the commands in a data store 406 which is divided into areas in which the TPC commands from each mobile user equipment are stored. The TPC commands are then interpreted by a strength estimator 408 to form for a relative strength of the signal received at the mobile user equipment form the Node B.

As indicated above the TPC commands provide an "up/down" adjustment of the transmitted power of the radio signal transmitted from the Node B to the mobile user equipment (down-link). As such starting from an initial predetermined value for the received signal strength of the radio signals, if the power control command is up then that value can be increased and if the power control command is down then the value can be decreased. Thus, after each TPC power control command is received, the initial value can be adjusted in accordance with the TPC command and by adjusting the initial value for all TPC commands received, a cumulative value is formed which after a time period can be used to determine a relative value of the strength of the received signal. Thus each time the TPC command is received the cumulative value is adjusted and that cumulative value used as a current sample in the time domain of the radio reception condition at the receiver of the mobile user equipment. As such, and as shown in Figure 4 the signal strength analyser 408 forms, for a sample period 410, a series of signal strength value samples 412 for the down-link signal strength as received at the mobile user equipment. The signal strength samples are formed from the cumulative value at each sample time when a corresponding TPC command is received.

A corresponding set of signal strength values is established for each of the mobile user equipment UE1, UE2, UE3, ..., UEN which are affiliated with the Node B 122. Each of the signal strength values for the predetermined period 410 are then forwarded to a Fourier transform processor 414 which performs a Fourier transform on the signal strength value samples to produce a frequency domain representation of the current reception condition, caused by the current environment of the mobile user equipment.

A graphical illustration of the frequency domain representation of the current radio reception condition is represented in Figure 4 by a plot 416 of amplitude with respect to frequency of the spectral characteristics of the radio reception environment.

For each user equipment the frequency domain representation of the radio reception condition is then fed to a command generator 418 which generates a receiver mode command for instructing the mobile user equipment to select one of a plurality of receiver modes which is most appropriate for the current reception condition. The examples of radio reception techniques which are selected in dependence upon current radio reception conditions experienced by the mobile user equipment will be explained shortly.

As shown in Figure 4 the frequency domain representation of the current reception condition provides a relative indication of the current radio reception environment as experienced by the mobile user equipment. According to the present technique it will be understood that the frequency domain representation provides a relative measure of the radio reception conditions at the mobile user equipment. Accordingly, given a set of possible reception modes, which are available to the mobile user equipment, one of these modes can be selected in dependence upon an analysis of the frequency domain representation of the signal strength values. To this end, a data store 420 provides a repository for information identifying the receiver modes, which are available to each of the mobile user equipment. With each receiver mode a predetermined reference is provided, which represents an example frequency domain profile of a radio reception condition for which that receiver mode should be used. In operation therefore, the command generator 418 compares the frequency domain reception condition for each mobile user with the predetermined reference for each of the receiver modes, which are available to the mobile user. From the comparison the command generator 418 determines the most appropriate one of the reception modes for the current reception condition, from the predetermined reference which most closely matches the frequency domain representation. The command generator 418 then generates a command for selecting the receiver mode corresponding to the closest predetermined reference. This command will be referred to as a receiver technique command (RMC) as shown in Figure 4. The receiver technique command is then forwarded to a transmitter of the base transceiver station 422 and communicated in a control sub-channel to the mobile user equipment for which the analysis and the corresponding receiver technique command RMC has been generated.

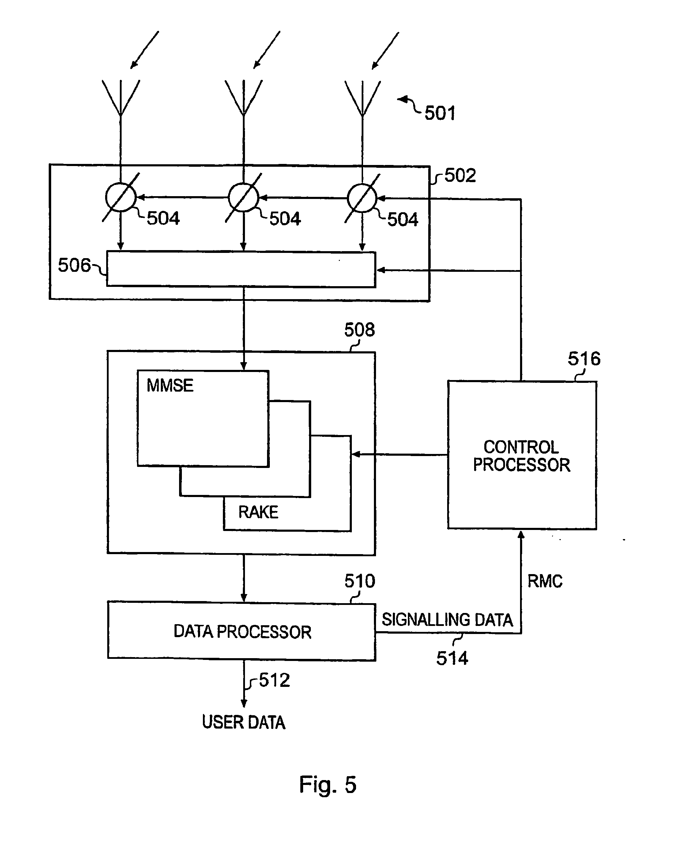

An example of possible reception techniques, which may be used within the mobile user equipment to improve the likelihood of correctly recovering data transmitted from the Node B, is shown in Figure 5. In Figure 5 the mobile user equipment is shown to include a plurality of antennae 501 which are used by an adaptive antenna combining unit 502. It is known to provide a plurality of antennae to a radio receiver and to adjust the phase of each version of the radio signal received from each of the antennae so that when combined a wanted radio signal can increase in signal strength thereby improving the likelihood of correctly recovering the data from the radio signal. It is known that adaptive antennae can be particularly useful in a fading channel, where the antennae are separated by an amount which is greater than a coherence distance of the channel. Thus as shown in Figure 5 the adaptive antennae unit 502 contains a phase adjustment element 504 for each of the antennae. The outputs of the phase adjustment unit 504 are then combined via a combiner 506 to form an output signal from a combination of each of the versions of the radio signal received form each of the antennae. Examples of combining techniques include maximal ratio combining.

The radio signal from the antenna combining unit 502 is then sent to a receiver processor 508 and processed to recover the data from the received radio signal. As shown in Figure 5 the receiver processor may include a variety of techniques such as for examples a Minimum Mean Squared Error (MMSE) Equaliser or a Rake receiver unit. Each of these different reception techniques can be selected by an appropriate command form the control processor. An output of the reception processor 508 communicates the recovered data to a data processor 510 which performs other data processing operations to recover signalling data and user data which are output on respective output channels 512, 514.

As mentioned above the Node B, communicates a receiver mode command RMC to each mobile user equipment in order to select one of a set of predetermined reception modes which are available to that mobile user equipment for the currently experienced environment Accordingly as shown in Figure 5 the data processor 508 recovers the receiver mode command RMC, and passes the RMC command to the control processor 516. The control processor 516 therefore selects an antenna combining process or a reception technique performed by the receiver processor 508 in accordance with the received reception mode command RMC. Accordingly an optimum reception technique can be employed in combination with an adaptive antenna technique for the currently experience radio communications conditions.

There are many techniques, which are known for optimising the reception of radio signals in accordance with the radio reception environment. Furthermore, it is known to provide a receiver with an arrangement in which a reception algorithm is selected and/or an adaptive antenna combining technique is employed in dependence upon a currently received reception environment. For example, an article entitled "Software Antenna with Algorithm Diversity" by Yoshi Kawasawa et al published in IEIC Trans. Communications in June 2000 discloses a software radio, which is arranged to adapt an antenna processing algorithm to a currently experienced interference conditions. Four typical environments are identified in terms of a number of interferers and a propagation delay spread. An algorithm is associated with each different environment. In this example, the receiver first determines the reception environment and then applies an appropriate algorithm.

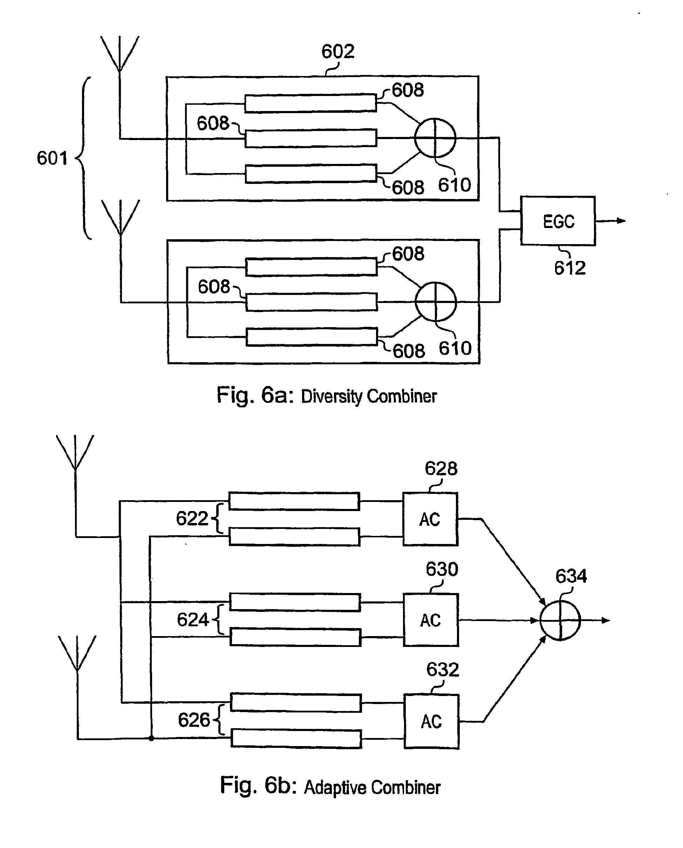

In an article entitled "Performance gain of Smart Antennae with Hybrid Combining at Handsets for 3GPPWCDMA System" by Sook Wong-Kim et al published in the International Symposium on Wireless Multimedia Communications pages 289 to 294, September 2004, Aalborg, Denmark, discloses an adaptive antenna combining technique for mobile user equipment. An example of two antenna combining processes disclosed in this article is shown in Figure 6. In Figure 6a a diversity combiner is shown in which each of two antennae receives a different version of a radio signal which is then fed to two Rake receiving processor 602, 604. Each Rake receiving processor 602, 604 includes a plurality of Rake fingers 606 and a combiner 608. The Rake receivers use a plurality of Rake fingers, each being arranged to perform a de-spreading operation for a particular temporal displacement as those acquainted with spread-spectrum technology will appreciate. The output of the de-spreading operation from each finger is combined by the combiners to form a composite signal. The composite signals from each of the Rake fingers is then combined by an Equal Gain Combiner (ECG) scheme processor 612. The diversity combiner shown in Figure 6a is particularly suitable where the antenna signals are less correlated, for instance if each signal undergoes independent fading the diversity combining scheme shown in Figure 6a should perform better than the adaptive combiner scheme shown in Figure 6b.

In Figure 6b two antennae 620 are again shown to receive different versions of the same radio signal. Each version of the received radio signal from each of the antennae 620 is then fed to a Rake finger of each of three groups of Rake fingers 624, 626 which are then combined by adaptive combiners 628, 630, 632 before being combined together by a combiner 634. As disclosed in the above-mentioned article the adaptive combiner performs better where the currently experienced reception environment includes a strong co-channel interferer. Thus by adapting the gains dynamically in each of the adaptive combiners 628, 630, 632 a wanted signal can be enhanced whereas an unwanted signal can be suppressed. Accordingly, this technique is more suitable for co-channel interference.

As will be appreciated from the above examples there are various reception modes, which can be employed that combine antenna diversity and signal processing techniques, which improve the integrity of information recovered from radio signals in the presence of different reception environments. As will be appreciated therefore different techniques can be used to receive radio signals in dependence upon the detected reception environment. Embodiments of the present technique therefore utilise the detected environment as performed by the Node B (base transceiver station) within any mobile radio system in order to select the appropriate reception mode.

### Summary of Operation

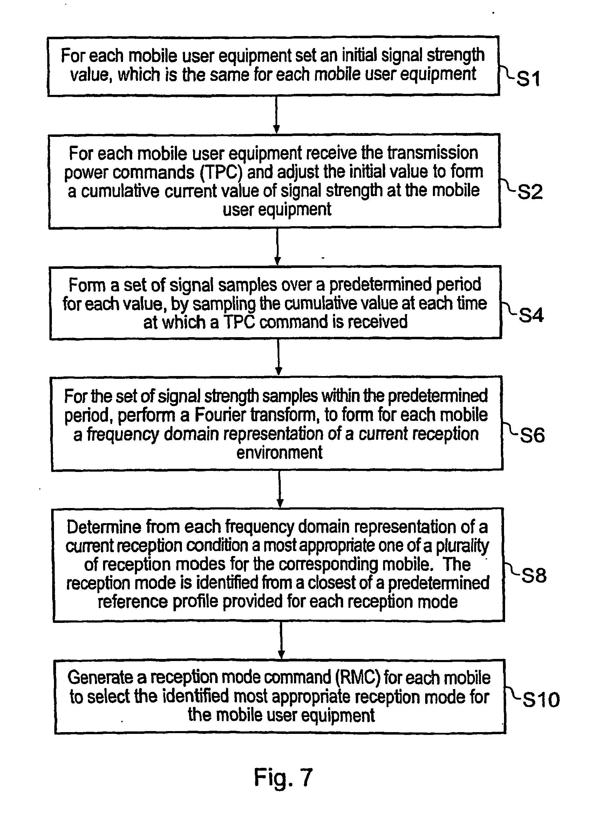

A flow diagram providing an illustration of the operations of a base transeiver station in order to generate a receiver mode command (RMC) is provided in Figure 7. The steps illustrated in Figure 7 are summarised as follows:
S1 For each mobile user equipment the base transceiver station sets an initial signal strength value, which is to be used as a default value for each mobile user equipment.
S2: For each mobile user equipment the base transceiver station receives the transmission power commands (TPC) for adjusting the down-link transmitted signal power. However base transceiver station then uses the TPC command to adjust the initial value to form a cumulative current value of signal strength at the mobile user equipment. As will be appreciated after the first TPC commands have been received the initial value will not accurately represent the signal strength received at the mobile user equipment. This is because the initial value has not been adjusted sufficiently to reflect the actual signal strength present at the mobile user equipment. However, after a period of time in which the TPC commands have been used to adjust the initial value in correspondence with the actual strength of the radio signals received by the mobile user equipment, the cumulative value will tend towards a more accurate representation of the signal strength actually present at the mobile user equipment.
S4 For each mobile the accumulated signal strength value is used to generate a sample of the signal strength value corresponding to the time at which each TPC command is received. Thus, over a predetermined period in which a series of samples are formed at intervals corresponding to the relative intervals between the TPC commands, a time domain representation of the variation of the received signal strength values at the mobile user equipment is established.
S6 For the set of signal strength values over the predetermined period a Fourier transform is performed to form, for each mobile, a frequency domain representation of the current reception condition.
S8 The frequency domain representation of the current reception environment is compared with a predetermined reference for each of the reception modes, which are available to the mobile user equipment. Each predetermined reference provides a frequency domain profile representing an example of a reception condition for which that reception mode should be used. As a result of the comparison one of the reception modes is identified as the most appropriate reception mode because the predetermined reference most closely matches the current reception condition as determined from the frequency domain representation.
S10 The base transceiver station then generates a reception mode command (RMC) for each mobile and transmits the reception mode command to the corresponding mobile user equipment Accordingly, a mobile can then adapt its reception technique in accordance with the received command.

Various modifications may be made to the embodiments of the invention herein before described without departing form the scope of the present invention. In particular, the present techniques has been illustrated for an example mobile radio network which operates in accordance with UMTS having a radio access interface in accordance with the UTRA standard which uses W-CDMA. However, it will be appreciated that the present technique can be used by any mobile radio system with any radio access network standard in order to improve the integrity of the information received from transmitted radio signals.

### ANNEX 1

### GPRS/UMTS Architecture

The terminology and architecture used in Figure 1 corresponds to that used for the UMTS and that proposed for 3G as administered by the 3GPP. In Figure 1, a Gateway GPRS Support Node (GGSN) is connected to an external Packet Data Network 102, (PDN). The external PDN communicates as packets using the Internet Protocol (IP). An interface 104 between the GGSN and the external network is labelled Gi which has been standardised although further aspects are being standardised. Also connected to the GGSN is a Serving GPRS Support Node (SGSN) 106 via an interface 108 labelled as Gn/Gp which is also being standardised.

The GGSN and the SGSN are two of network components, which are required to support GPRS. The GGSN acts as the gateway between the external packet data networks (PDN) and the mobile network, which supports GPRS. The GGSN contains sufficient information to route incoming IP data packets to the SGSN that is serving a particular User Equipment (UE) which is mobile and receives data via a radio access facility provided by the mobile packet radio network. For the example embodiment the radio access facility is provided in accordance with the Universal Terrestrial Radio Access Network (UTRAN) system which is specified in accordance with the 3GPP standard. The SGSN is connected to the GGSN via a Gn interface if the SGSN is within the same Public Land Mobile Network (PLMN), and connected via the Gp interface to GGSNs belonging to other PLMNs.

An SGSN provides mobility management of UEs which are moving within an area supported by the mobile radio network. To this end the SGSN is provided with access to a Home Location Register (HLR) 110. The SGSN is arranged to route data packets to Radio Network Controllers (RNC) 112, 114 for communication via the UTRAN radio access facility to mobile users UE 116, 118. The UTRAN radio access facility is provided using Node B apparatus 120, 122, 124, 126, 128, which effectively form base transceiver stations providing radio coverage for the area served by the mobile telecommunications network. The interface 130, 132, 134, 136, 138 between each RNC 112, 114 and the Node B apparatus 120, 122, 124, 126, 128, are labelled Iub and conform to an established or evolving standard. Similarly the interfaces 140, 142 between the SGSN and each RNC 112, 114 are labelled as Iu-ps and is an evolving standard.

## Claims

1. A base transceiver station (422) operable in response to power control commands received from a mobile user equipment (116, 118) **characterized in that** it comprises
an analyser (408) operable to derive samples (412) representative of a strength with which a radio signal is received by the mobile user equipment, based on the power control commands,
a frequency domain generator (414) operable to generate a frequency domain representation of a reception condition with which the radio signal is received at the mobile user equipment by performing a Fourier transform on a collection of the signal strength samples within a predetermined time window, and
a command generator (418) operable to generate a reception mode command for communication to the mobile user equipment, wherein the reception mode command represents one of a plurality of reception modes available to the mobile user equipment, which reception mode is most appropriate for receiving the radio signal as indicated by the frequency domain representation (416) of the current reception condition.

2. A base transceiver station as claimed in Claim 1, wherein the command generator is operable
to identify the plurality of reception modes which are available to the mobile user equipment,
to compare the frequency domain representation of the current reception condition with predetermined references, the predetermined references providing a reference frequency domain representation which is appropriate for each of the plurality of reception modes, and
consequent upon the comparison, to generate the reception mode command for selecting one of the plurality of reception modes in correspondence with the predetermined reference which most closely matches the frequency domain representation of the current reception condition.

3. A base transceiver station as claimed in Claim 2, wherein the plurality of reception modes includes a equaliser mode in which the receiver is arranged to process the received radio signal using an equaliser, and a rake receiver mode in which the receiver is arranged to use a rake receiver in order to process the received radio signal, the command generator being arranged to generate the command for selecting the rake receiver mode if the frequency domain representation of the current reception condition indicates, when compared to the corresponding predetermined reference, a high multi-path environment and for selecting the equaliser mode if the frequency domain representation of the current reception condition indicates, when compared to the corresponding predetermined reference, a low multi-path environment with respect to the predetermined reference.

4. A base transceiver station as claimed in Claim 2 or 3, wherein the receiver of the mobile user equipment includes an adaptive antenna system, and the plurality of reception modes includes a co-channel interference cancellation mode and a beam steering mode, the command generator being arranged to generate the command for selecting the co-channel interference cancellation mode if the frequency domain representation of the current reception condition when compared to a predetermined reference indicates, when compared to the corresponding predetermined reference, that a co-channel interferer is reducing an ability of the receiver to detect the radio signal transmitted by the base transceiver station and for selecting the beam steering mode if the frequency domain representation of the current reception condition indicates, when compared to the corresponding predetermined reference, that the radio signal is not subject to co-channel interference.

5. A base transceiver station as claimed in any preceding Claim, wherein the power control commands provide an up or down indication for adjusting the power of the radio signal transmitted from the base transceiver station to the mobile user equipment, and the analyser is operable
to establish an initial predetermined value of the signal strength of the received radio signal,
to adjust the initial value by increasing or decreasing the initial value in correspondence with the power control commands to form an accumulated signal strength value, and
to derive the samples representative of the strength of the received radio signals by forming a current received signal strength sample from the value of the accumulated signal strength value, with respect to a time at which the power control command is received.

6. A mobile radio network including a base transceiver station according to any of Claims 1 to 5.

7. A telecommunications system including a mobile radio network according to Claim 6 and at least one mobile user equipment.

8. A method for selecting one of a plurality of reception modes of a mobile user equipment (116; 118) for receiving a radio signal from a base transceiver station (422) for receiving a radio signal form a base transceiver station (422), the method comprising
adjusting a power with which a data bearing radio signal is transmitted to the mobile user equipment from the base transceiver station, in response to power control commands received from the mobile user equipment,
deriving samples representative of a strength with which the radio signal is received by the mobile user equipment, based on the power control commands received from the mobile user equipment,
generating a frequency domain representation of a reception condition with which the radio signal is received at the mobile user equipment by performing a Fourier transform on a collection of the signal strength samples within a predetermined time window, and
generating a command for communication to the mobile user equipment, wherein the command represents one of a plurality of reception modes available to the mobile user equipment, which reception mode is most appropriate for receiving the radio signal as indicated by the frequency domain representation of the current reception condition.

9. A method as claimed in Claim 8, wherein the generating a command for communication to the mobile user equipment, comprises
identifying the plurality of reception modes which are available to the mobile user equipment,
comparing the frequency domain representation of the current reception condition with one or more predetermined references, the predetermined references providing a reference frequency domain representations which are appropriate for each of the plurality of reception modes, and
consequent upon the comparison, generating the reception mode command for selecting one of the plurality of reception modes in correspondence with the predetermined reference which most closely matches the frequency domain representation of the current reception condition.

10. A computer program, which when loaded onto a data processor, causes the data processor to perform a method according to Claim 8 or 9.

11. A computer program product having an information bearing medium, having recorded thereon a computer program, which when loaded onto a data processor, causes the data processor to perform a method according to Claim 8 or 9.

12. A medium bearing the computer program according to Claim 10.

## Patentansprüche

1. Basissender/-empfängerstation (422) der betreibbar ist als Reaktion auf von einem Mobilbenutzergerät empfangene Leistungsregelbefehle, **dadurch gekennzeichnet, dass** sie Folgendes umfasst:
einen Analysator (408), der betreibbar ist, um Abtastwerte (412), die eine Stärke repräsentieren, mit der ein Funksignal von dem Mobilbenutzergerät empfangen wird, auf der Basis von den Leistungsregelbefehlen,
einen Frequenzbereichsgenerator (414), der betreibbar ist, um eine Frequenzbereichsdarstellung einer Empfangsbedingung, mit der das Funksignal an dem Mobilbenutzergerät empfangen wird, zu erzeugen, indem eine Fouriertransformation an einer Ansammlung der Abtastwerte innerhalb eines vorbestimmten Zeitfensters ausgeführt wird und
einen Befehlsgenerator (418), der betreibbar ist, um einen Empfangsmodusbefehl zur Übermittlung zu dem Mobilbenutzergerät zu erzeugen, wobei der Empfangsmodusbefehl einen von mehreren Empfangsmodi repräsentiert, die dem Mobilbenutzergerät verfügbar sind, wobei dieser Empfangsmodus wie durch die Frequenzbereichsdarstellung (416) der aktuellen Empfangsbedingung angegeben am besten zum Empfangen des Funksignals geeignet ist.

2. Basissender/-empfängerstation nach Anspruch 1, wobei der Befehlsgenerator für Folgendes betreibbar ist:
Identifizieren der mehreren Empfangsmodi, die dem Mobilbenutzergerät verfügbar sind,
Vergleichen der Frequenzbereichsdarstellung der aktuellen Empfangsbedingung mit vorbestimmten Referenzen, wobei die vorbestimmten Referenzen eine Referenz-Frequenzbereichsdarstellung bereitstellen, die für jeden der mehreren Empfangsmodi geeignet ist, und
Erzeugen des Empfangsmodusbefehl nach dem Vergleich zum Auswählen eines der mehreren Empfangsmodi entsprechend der vorbestimmten Referenz, die am besten mit der Frequenzbereichsdarstellung der aktuellen Empfangsbedingung übereinstimmt.

3. Basissender/-empfängerstation nach Anspruch 2, wobei die mehreren Empfangsmodi Folgendes umfassen: einen Entzerrermodus, in dem der Empfänger dafür ausgelegt ist, das empfangene Funksignal unter Verwendung eines Entzerrers zu verarbeiten, und einen Rake-Empfängermodus, in dem der Empfänger angeordnet ist, einen Rake-Empfänger zu verwenden, um das empfangene Funksignal zu verarbeiten, wobei der Befehlsgenerator dafür ausgelegt ist, den Befehl zum Auswählen des Rake-Empfängermodus zu erzeugen, wenn die Frequenzbereichsdarstellung der aktuellen Empfangsbedingung im Vergleich zu der entsprechenden vorbestimmten Referenz eine Umgebung mit hohen Mehrfachpfaden angibt, und den Entzerrermodus auszuwählen, wenn die Frequenzbereichsdarstellung der aktuellen Empfangsbedingung im Vergleich zu der entsprechenden vorbestimmten Referenz eine Umgebung mit geringen Mehrfachpfaden mit Bezug auf die vorbestimmte Referenz angibt.

4. Basissender/-empfängerstation nach Anspruch 2 oder 3, wobei der Empfänger des Mobilbenutzergeräts ein adaptives Antennensystem umfasst und die mehreren Empfangsmodi einen Kokanal-Störungslöschmodus und einen Strahllenkmodus umfassen, wobei der Befehlsgenerator dafür ausgelegt ist, den Befehl zum Auswählen des Kokanal-Störungslöschmodus zu erzeugen, wenn die Frequenzbereichsdarstellung der aktuellen Empfangsbedingung im Vergleich zu einer vorbestimmten Referenz im Vergleich zu der entsprechenden vorbestimmten Referenz angibt, dass ein Kokanal-Störer die Fähigkeit des Empfängers reduziert, das von der Basissender/- empfängerstation gesendete Funksignal zu detektieren, und den Strahllenkmodus auszuwählen, wenn die Frequenzbereichsdarstellung der aktuellen Empfangsbedingung im Vergleich zu der entsprechenden vorbestimmten Referenz angibt, dass das Funksignal keine Kokanal-Störungen erfährt.

5. Basissender/-empfängerstation nach einem der vorhergehenden Ansprüche, wobei die Leistungsregelbefehle eine Aufwärts- oder Abwärtsangabe zum Justieren der Leistung des von der Basissender/-empfängerstation zu dem Mobilbenutzergerät gesendeten Funksignals bereitstellen und der Analysator für Folgendes betreibbar ist:
Ermitteln eines anfänglichen vorbestimmten Werts der Signalstärke des empfangenen Funksignals,
Justieren des anfänglichen Werts durch Vergrößern oder Verkleinern des anfänglichen Werts entsprechend den Leistungsregelbefehlen, um einen akkumulierten Signalstärkewert zu bilden, und
Ableiten der die Stärke der empfangenen Funksignale repräsentierenden Abtastwerte durch Bilden eines aktuellen Empfangssignalstärkeabtastwerts aus dem Wert des akkumulierten Signalstärkewerts mit Bezug auf einen Zeitpunkt, zu dem der Leistungsregelbefehl empfangen wird.

6. Mobilfunknetz, das eine Basissender/-empfängerstation nach einem der Ansprüche 1 bis 5 umfasst.

7. Telekommunikationssystem, das ein Mobilfunknetz nach Anspruch 6 und mindestens ein Mobilbenutzergerät umfasst.

8. Verfahren zum Auswählen eines von mehreren Empfangsmodi eines Mobilbenutzergeräts (116; 118) zum Empfangen eines Funksignals von einer Basissender/-empfängerstation (422), wobei das Verfahren Folgendes umfasst:
Justieren einer Leistung, mit der ein datenführendes Funksignal von der Basissender/-empfängerstation zu dem Mobilbenutzergerät gesendet wird, als Reaktion auf von dem Mobilbenutzergerät empfangene Leistungsregelbefehle, und **gekennzeichnet durch**
Ableiten von Abtastwerten, die eine Stärke repräsentieren, mit der das Funksignal **durch** das Mobilbenutzergerät empfangen wird, auf der Basis der von dem Mobilbenutzergerät empfangenen Leistungsregelbefehle,
Erzeugen einer Frequenzbereichsdarstellung einer Empfangsbedingung, mit der das Funksignal an dem Mobilbenutzergerät empfangen wird, **durch** Ausführen einer Fouriertransformation an einer Ansammlung der Signalstärkeabtastwerte innerhalb eines vorbestimmten Zeitfensters und
Erzeugen eines Befehls zur Übermittlung zu dem Mobilbenutzergerät, wobei der Befehl einen der mehreren Empfangsmodi repräsentiert, die dem Mobilbenutzergerät zur Verfügung stehen, wobei dieser Empfangsmodus wie **durch** die Frequenzbereichsdarstellung der aktuellen Empfangsbedingung angegeben am besten zum Empfangen des Funksignals geeignet ist.

9. Verfahren nach Anspruch 8, wobei das Erzeugen eines Befehls zur Übermittlung zu dem Mobilbenutzergerät Folgendes umfasst:
Identifizieren der mehreren Empfangsmodi, die dem Mobilbenutzergerät verfügbar sind,
Vergleichen der Frequenzbereichsdarstellung der aktuellen Empfangsbedingung mit einer oder mehreren vorbestimmten Referenzen, wobei die vorbestimmten Referenzen Referenz-Frequenzbereichsdarstellungen bereitstellen, die für jeden der mehreren Empfangsmodi geeignet sind, und
Erzeugen des Empfangsmodusbefehls nach dem Vergleich zum Auswählen eines der mehreren Empfangsmodi entsprechend der vorbestimmten Referenz, die am besten mit der Frequenzbereichsdarstellung der aktuellen Empfangsbedingung übereinstimmt.

10. Computerprogramm, das, wenn es auf einen Datenprozessor geladen wird, bewirkt, dass der Datenprozessor ein Verfahren nach Anspruch 8 oder 9 ausführt.

11. Computerprogrammprodukt, das ein Informationsträgermedium aufweist, worauf ein Computerprogramm aufgezeichnet ist, das, wenn es auf einen Datenprozessor geladen wird, bewirkt, dass der Datenprozessor ein Verfahren nach Anspruch 8 oder 9 ausführt.

12. Medium, das das Computerprogramm nach Anspruch 10 trägt.

## Revendications

1. Station émettrice-réceptrice de base (422), exploitable en réponse à des instructions de commande de puissance reçues depuis un équipement utilisateur mobile **caractérisée en ce qu'**elle comprend
un analyseur (408) exploitable pour dériver des échantillons (412) représentatifs d'une force à laquelle un signal radio est reçu par l'équipement utilisateur mobile, en fonction d'instructions de commande de puissance,
un générateur de domaine de fréquence (414) exploitable pour générer une représentation de domaine de fréquence d'une condition de réception du signal radio reçu au niveau dudit équipement utilisateur mobile en exécutant une transformée de Fourier sur une collection desdits échantillons dans une fenêtre de temps prédéterminée, et
un générateur d'instruction (418) exploitable pour générer une instruction de mode de réception à communiquer audit équipement utilisateur mobile, ladite instruction de mode de réception représentant l'un d'une pluralité de modes de réception à la disposition dudit équipement utilisateur mobile, le mode de réception le plus approprié pour la réception dudit signal radio étant indiqué par la représentation de domaine de fréquence (416) de la condition de réception courante.

2. Station émettrice-réceptrice de base selon la revendication 1, dans laquelle le générateur d'instruction est exploitable pour
identifier la pluralité de modes de réception à la disposition de l'équipement utilisateur mobile,
comparer la représentation de domaine de fréquence de la condition de réception courante à des références prédéterminées, les références prédéterminées fournissant une représentation de domaine de fréquence de référence qui est appropriée pour chacun de la pluralité de modes de réception, et
suite à la comparaison, générer l'instruction de mode de réception pour sélectionner l'un de la pluralité de modes de réception correspondant à la référence prédéterminée qui se rapproche le plus de la représentation de domaine de fréquence de la condition de réception courante.

3. Station émettrice-réceptrice de base selon la revendication 2, dans laquelle la pluralité de modes de réception comporte un mode égaliseur dans lequel le récepteur est agencé pour traiter le signal radio reçu au moyen d'un égaliseur, et un mode de récepteur Rake dans lequel le récepteur est agencé pour utiliser un récepteur Rake afin de traiter le signal radio reçu, le générateur d'instruction étant agencé pour générer l'instruction de sélection du mode de récepteur Rake si la représentation de domaine de fréquence de la condition de réception courante indique, après comparaison à la référence prédéterminée correspondante, un environnement multi-chemins haut, et pour sélectionner le mode égaliseur si la représentation de domaine de fréquence de la condition de réception courante indique, après comparaison à la référence prédéterminée correspondante, un environnement multi-chemins bas relativement à la référence prédéterminée.

4. Station émettrice-réceptrice de base selon la revendication 2 ou 3, dans laquelle le récepteur de l'équipement utilisateur mobile comporte un système d'antenne adaptatif, et la pluralité de modes de réception comporte un mode de suppression d'interférence dans le même canal et un mode d'orientation de faisceau, le générateur d'instruction étant agencé pour générer l'instruction de sélection du mode de suppression d'interférence dans le même canal si la représentation de domaine de fréquence de la condition de réception courante après comparaison à une référence prédéterminée indique, après comparaison à la référence prédéterminée correspondante, qu'un élément interférant dans le même canal réduit une capacité du récepteur à détecter le signal radio émis par la station émettrice-réceptrice de base et pour sélectionner le mode d'orientation de faisceau si la représentation dans le domaine de fréquence de la condition de réception courante indique, après comparaison à la référence prédéterminée correspondante, que le signal radio ne subit pas d'interférence dans le même canal.

5. Station émettrice-réceptrice de base selon l'une quelconque des revendications précédentes, dans laquelle les instructions de commande de puissance fournissent une indication d'augmentation ou de réduction pour le réglage de la puissance du signal radio émis par la station émettrice-réceptrice de base à l'équipement utilisateur mobile, et l'analyseur est exploitable pour
établir une valeur prédéterminée initiale de la force de signal du signal radio reçu,
ajuster la valeur initiale en augmentant ou diminuant la valeur initiale selon les instructions de commande de puissance afin de former une valeur de force de signal cumulée, et
dériver les échantillons représentatifs de la force des signaux radio reçus en formant un échantillon de force de signal reçu courant à partir de la valeur de force de signal cumulée, relativement à un temps de réception de l'instruction de commande de puissance.

6. Réseau radio mobile comportant une station émettrice-réceptrice de base selon l'une quelconque des revendications 1 à 5.

7. Système de télécommunications comprenant un réseau radio mobile selon la revendication 6 et au moins un équipement utilisateur mobile.

8. Procédé de sélection de l'un d'une pluralité de modes de réception d'un équipement utilisateur mobile (116 ; 118) pour recevoir un signal radio depuis une station émettrice-réceptrice de base (422), le procédé comprenant
le réglage d'une puissance avec laquelle un signal radio porteur de données est émis vers l'équipement utilisateur mobile depuis la station émettrice-réceptrice de base, en réponse à des instructions de commande de puissance reçues depuis l'équipement utilisateur mobile, et caractérisé en
la dérivée d'échantillons représentatifs d'une force à laquelle le signal radio est reçu par l'équipement utilisateur mobile, en fonction des instructions de commande de puissance reçues depuis l'équipement utilisateur mobile,
la génération d'une représentation de domaine de fréquence d'une condition de réception du signal radio reçu au niveau de l'équipement utilisateur mobile en exécutant une transformée de Fourier sur une collection desdits échantillons dans une fenêtre de temps prédéterminée, et
la génération d'une instruction à communiquer à l'équipement utilisateur mobile, ladite instruction représentant l'un d'une pluralité de modes de réception à la disposition dudit équipement utilisateur mobile, lequel mode de réception est celui le plus approprié pour la réception dudit signal radio tel qu'indiqué par la représentation de domaine de fréquence de la condition de réception courante.

9. Procédé selon la revendication 8, dans lequel la génération d'une instruction à communiquer à l'équipement utilisateur mobile comprend
l'identification de la pluralité de modes de réception à la disposition de l'équipement utilisateur mobile,
la comparaison de la représentation de domaine de fréquence de la condition de réception courante à une ou plusieurs références prédéterminées, les références prédéterminées fournissant des représentations de domaine de fréquence de référence qui sont appropriées pour chacun de la pluralité de modes de réception, et
suite à la comparaison, la génération de l'instruction de mode de réception pour sélectionner l'un de la pluralité de modes de réception correspondant à la référence prédéterminée qui se rapproche le plus de la représentation de domaine de fréquence de la condition de réception courante.

10. Programme informatique qui, lorsqu'il est chargé sur un processeur de données, amène le processeur de données à exécuter un procédé selon la revendication 8 ou 9.

11. Produit de programme informatique ayant un support porteur d'informations, sur lequel est enregistré un programme informatique qui, lorsqu'il est chargé sur un processeur de données, amène le processeur de données à exécuter un procédé selon la revendication 8 ou 9.

12. Support portant le programme informatique selon la revendication 10.
